# EUROPEAN PATENT APPLICATION

(11) **EP 1 662 162 A1**
(43) Date of publication of application: **31.05.2006**
(21) Application number: 06110630.8
(22) Date of filing: 07.05.2003
(51) Int. Cl.: F16D 21/06

(54) **A clutch and flywheel assembly for a motor-vehicle**

(30) Priority: 08.05.2002 IT TO20020382
(62) Divisional of application: 03010242.0
(71) Applicant: C.R.F. Società Consortile per Azioni, 10043 Orbassano (TO) (IT)
(72) Inventor: Caenazzo, Dario, I-10043, Orbassano (Torino) (IT); Mesiti, Domenico, I-10043, Orbassano (Torino) (IT); Pregnolato, Gianluigi, I-10043, Orbassano (Torino) (IT); Uberti, Maurizio, I-10043, Orbassano (Torino) (IT)
(74) Representative: Rondano, Davide

(57) **Abstract**

A clutch and flywheel assembly intended to be mounted between a crankshaft (14) and a gearbox of a motor-vehicle, comprising
a clutch unit (12) with at least one clutch (13,113;113;13) including a driven portion (48,50,148,150;148,150;48,50) intended to be connected for rotation with a respective at least one input shaft (11,111;111;11) of the gearbox and a driving portion (41,52,54,141,152,154;141,152,154;41,52,54) intended to be connected for rotation with the crankshaft (14); and
a two-mass flywheel (30) comprising a first engine-side mass (31), a second gearbox-side mass (32) comprising said driving portion (41,52,54,141,152,154;141,152,154;41,52,54) of the at least one clutch (13,113;113;13) and torsional damping means (40) interposed between said first and second masses (31,32);
wherein the said second mass (32) is configured to be supported for rotation (44) on the at least one input shaft (11,111;111;11) of the gearbox.

## Description

The present invention relates to a clutch and flywheel assembly intended to be mounted between a crankshaft and a gearbox of a motor-vehicle, as specified in the preamble of Claim 1.

The object of the invention is to provide a clutch and flywheel assembly for a motor-vehicle which is able to operate even in case of misalignments and eccentricities between the crankshaft and the input shaft, or the input shafts, of the gearbox.

A further object of the present invention is to provide a clutch and flywheel assembly for a motor-vehicle which is able to filter out the torsional and axial oscillations of the crankshaft.

These objects are achieved in full by a clutch and flywheel assembly for a motor-vehicle having the characteristics defined in independent Claim 1.

Further advantageous characteristics of the invention are defined in the dependent claims.

The characteristics and the advantages of the invention will become clearer from the following detailed description given purely by way of non-limiting example with reference to the appended drawings, in which:
Figure 1 is a longitudinal section through a clutch and flywheel assembly for a motor-vehicle according to a first preferred embodiment of the invention, for use in a motor-vehicle double-clutch transmission,
Figure 2 is a longitudinal section through a clutch and flywheel assembly for a motor-vehicle according to a second preferred embodiment of the invention, for use in a motor-vehicle double-clutch transmission,
Figure 3 is a longitudinal section through a clutch and flywheel assembly for a motor-vehicle according to a third preferred embodiment of the invention, for use in a motor-vehicle single-clutch transmission, and
Figure 4 is a longitudinal section through a clutch and flywheel assembly for a motor-vehicle according to a fourth preferred embodiment of the invention, for use in a motor-vehicle single-clutch transmission.

In the description and the claims which follow, terms such as "longitudinal" or "axial", as well as "radial" or "transverse" are intended to refer to the mounted condition on a motor vehicle.

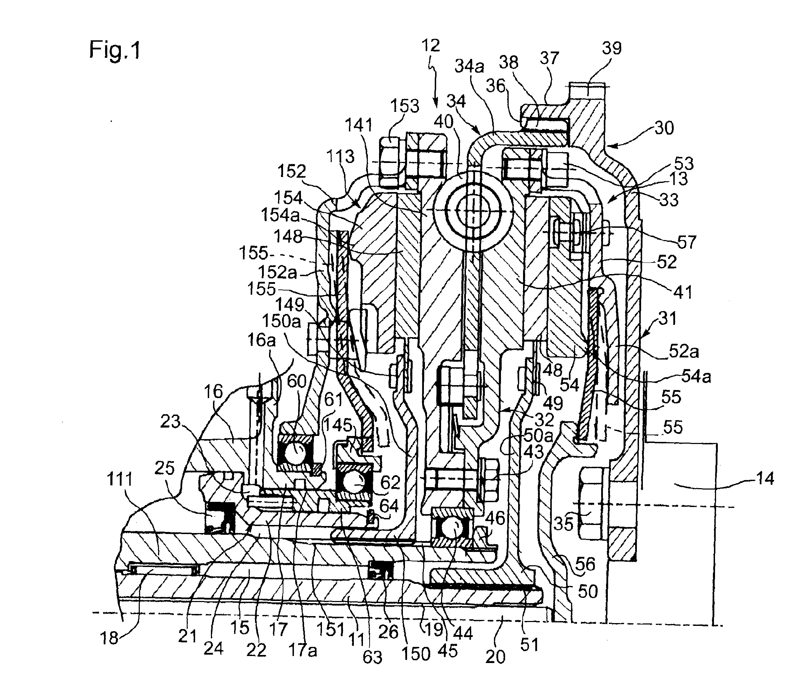

With reference to Figure 1, a clutch and flywheel assembly for a motor-vehicle according to a first preferred embodiment of the invention is mounted between a crankshaft 14 and a gearbox (not entirely illustrated) of the type known for example from Italian Patent Application T02001A000286.

According to this embodiment, the clutch and flywheel assembly is associated to a gearbox having two coaxial input shafts, that is, an inner input shaft 11 and an outer input shaft 111. The clutch and flywheel assembly includes a clutch unit 12 with two clutches 13 and 113 of the normally-engaged single-plate dry type, for connecting the crankshaft 14, of which only the end portion facing towards the gearbox is shown, for rotation with the gearbox input shafts 11 and 111, respectively.

The gearbox is enclosed by a support housing 16, shown partially in Figure 1 and having, at the end facing towards the clutch unit 12, a tubular extension 17 with a central axial hole 17a through which the two coaxial input shafts 11 and 111 extend. The outer shaft 111 has a tubular structure with a substantially cylindrical, central, coaxial cavity 15. The cavity 15 houses the inner shaft 11 which is supported for rotation by support elements of known type, including, for example, a needle bearing 18. The inner shaft 11 also has a tubular structure with a substantially cylindrical, central, coaxial cavity 19 in which a rod 20 for actuating the clutch 13 is slidable axially.

A sleeve 21 is interposed radially between the outer input shaft 111 and the cylindrical hole 17a formed in the extension 17 of the support housing 16. At the end facing towards the clutch unit 12, the sleeve 21 forms a cylindrical portion 22 which is coaxial with the two input shafts and which defines, with the cylindrical hole 17a, an outer annular space 23 and, with the shaft 111, an inner annular space 24.

Two oil-seal rings 25 and 26 are fitted between the sleeve 21 and the outer input shaft 111 and between the two input shafts 11 and 111, respectively, to prevent lubricating oil passing from the gearbox compartment, which operates in an oil bath, to the clutch unit 12 which, on the other hand, operates dry.

A two-mass flywheel, generally indicated 30 and comprising a first mass 31 and a second mass 32, is interposed axially between the clutch unit 12 and the crankshaft 14.

The first mass 31 of the flywheel 30 comprises a first element 33 and a second element 34 which are arranged side by side, the first facing towards the engine and the second towards the gearbox.

The first element 33 of the mass 31 is formed as a disc with an axial section that is variously shaped but extends substantially radially. A plurality of holes are formed in a radially inner position of the element 33 for the fixing of the element to the crankshaft 14 by means of screws 35 and, in a radially outer position, a tubular extension 37 provided with an internal ring gear 36 projects axially towards the second element 34. The element 33 also has, on its outer periphery, a ring gear 39 for meshing with a pinion of the electric starter (not shown) for starting the internal combustion engine of the vehicle.

The second element 34 of the mass 31 also is formed as a disc having a substantially L-shaped axial section with a cylindrical annular portion 34a which projects axially towards the first element 33. A ring gear 38 is formed on the outer periphery of the portion 34a and meshes permanently with the ring gear 36 of the first element 33 so as to connect the two elements 33 and 34 of the first mass 31 for rotation. The element 34 is also connected to the second mass 32 through a torsional damper 40, such as for example flexible-coupling springs.

The second mass 32 of the flywheel 30 also comprises a first element 41 and a second element 141, which are both disc-shaped and are disposed on axially opposite sides of the second element 34 of the first mass 31 and are fixed together by means of screws 43. The mass 32 is supported for rotation by a radial ball bearing 44 mounted on the outer gearbox input shaft 111. The outer race of the bearing 44 is clamped axially between a pair of shoulders provided by the two elements 41 and 141 of the mass 32. The inner race of the bearing 44 is mounted in axial abutment on one side with a side of a splined portion 45 formed on the outer cylindrical surface of the shaft 111, and is clamped axially on the opposite side by means of a ring nut 46.

The first element 41 of the second mass 32 of the flywheel 30 is also arranged to act as an abutment member for the clutch 13 associated with the inner gearbox input shaft 11.

The clutch 13 is composed of a driven portion and of a driving portion which are fast for rotation with the input shaft 11 and with the crankshaft 14 (via the flywheel 30), respectively, and which can be coupled torsionally with each other to permit the transmission of torque between the shafts 11 and 14.

The driven portion of the clutch 13 comprises a plate 48 which is provided with rings made of friction material on both of its axial faces and which is fixed, by means of rivets 49, to a flange 50a of a hub 50 arranged so as to be slidable axially along a splined end portion 51 of the inner gearbox input shaft 11.

In addition to the above-described abutment member 41, the driving portion of the clutch 13 comprises a cover 52 fixed to the periphery of the member 41 by means of screws 53 and having a substantially vertical wall 52a which extends radially inwards on the axially opposite side of the plate 48 to the member 41. An axially movable clutch pressure plate 54 interposed between the plate 48 and the cover 52 is restrained for rotation with the latter by means of tangential tabs 57. The clutch pressure plate 54 is urged axially against the plate 48 by a disc spring 55 so that the plate 48 is kept clamped between the abutment member 41 and the pressure plate 54 and can therefore transmit torque with these two components as a result of the friction between the axial abutment surfaces.

The disc spring 55 is clamped axially between its two radially outer and radially inner end portions, respectively, by the vertical wall 52a of the cover 52 and by a disc-shaped engagement element 56 which can be moved axially by the actuating rod 20. When the spring is not deformed, that is, when no command is imparted to the clutch 13 by means of the rod 20, a radially intermediate portion of the spring 55 exerts a leftward axial pressure (as observed in Figure 1) against a projection 54a of the clutch pressure plate 54, thus keeping the clutch 13 engaged.

In order to disengage the clutch 13 it is necessary to move the actuating rod 20 towards the right along the cavity 19 of the inner input shaft 11 so as to urge the radially inner portion of the spring 55 by means of the engagement element 56. The spring 55 pivots on the cover 52 and thus tends to rotate about its radially outer edge until it achieves the deformed configuration shown in broken line in Figure 1. In this condition, the clutch pressure plate 54, which is no longer subject to the axial pressure of the spring 55, moves away from the plate 48 by virtue of the action of the tangential tabs 57, thus interrupting the transmission of torque between the driving portion and the driven portion of the clutch.

The structure of the clutch 113 associated with the outer gearbox input shaft 111 will now be described, again with reference to Figure 1, in which the components and parts of the clutch 113 which correspond in structure and/or function to those of the clutch 13 are indicated by the same reference numerals but increased by 100.

The clutch 113 is composed of a driven portion and of a driving portion which are fast for rotation with the outer input shaft 111 and with the crankshaft 14 (via the flywheel 30), respectively, and which can be coupled torsionally with each other to permit the transmission of torque between the shafts 111 and 14.

The driven portion of the clutch 113 comprises a plate 148 which is provided with rings made of friction material on both of its axial faces and which is fixed by means of rivets 149 to a flange 150a of a hub 150 arranged so as to be slidable axially along a splined portion 151 of the outer gearbox input shaft 111.

The driving portion of the clutch 113 comprises, substantially:
- an abutment member provided by the second element 141 of the second mass 32 of the flywheel 30,
- a cover 152 fixed by screws 153 to the periphery of the member 141 and having a substantially vertical wall 152a which extends radially inwards on the axially opposite side of the plate 148 to the member 141, separating the clutch unit 12 from the gearbox, and
- an axially movable clutch pressure plate 154 interposed between the plate 148 and the cover 152 and restrained for rotation with the latter by means of tangential tabs (not visible in Figure 1).

The cover 152 is supported for rotation by a radial ball bearing 60 fitted on the tubular extension 17 of the gearbox housing 16. The outer race of the bearing 60 is free axially, whereas the inner race is clamped by a snap ring 61 against a shoulder formed in the housing 16.

In rest conditions, that is, when the driver of the vehicle is not imparting any commands to the clutch, the plate 148 is kept clamped between the abutment member 141 and the clutch pressure plate 154 as a result of the axial pressure exerted by a disc spring 155 on the plate 154.

The disc spring 155 is restrained on the vertical wall 152a of the cover 152 and bears, with its two radially outer and radially inner end portions, respectively, against a projection 154a of the clutch pressure plate 154, and against an annular engagement element 145. The element 145 is supported for rotation by a radial ball bearing 62 mounted on an end of a plunger 63.

The plunger 63 is arranged so as to be slidable axially in the annular space 23 formed between the cylindrical portion 22 of the sleeve 21 and the tubular extension 17 of the gearbox support housing 16. The supply of oil under pressure to the annular space 23 from a duct formed in a vertical wall 16a of the gearbox housing 16 brings about rightward axial movement of the plunger 63 as far as a travel-limit position defined by a snap ring 64 fitted on the end of the sleeve 22 facing the engine. By means of the engagement element 145, the plunger 63 pulls along the radially inner end portion of the spring 155 which thus tends to pivot about its radially intermediate portion, which is restrained on the cover 152, until it achieves the deformed configuration shown in broken outline in Figure 1. In this condition, the clutch pressure plate 154, which is no longer subject to the axial pressure of the spring 155, moves away from the plate 148 by virtue of the action of the tangential tabs, thus interrupting the transmission of torque between the driving portion and the driven portion of the clutch 113.

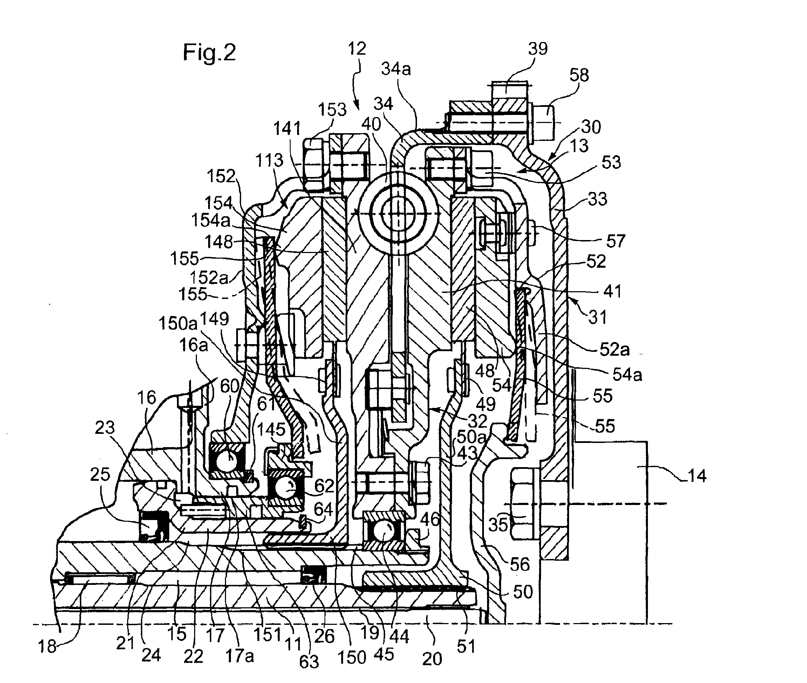

A second preferred embodiment of a motor-vehicle clutch and flywheel assembly according to the invention is shown in Figure 2, in which parts and elements identical or corresponding to those of Figure 1 have been given the same reference numerals.

As is clear from a comparison between Figures 1 and 2, this second embodiment is substantially identical to that described above, with the difference that the first and second elements 33 and 34 of the first mass 31 of the flywheel 30 are connected for rotation with one another by means of screws 58 instead of by meshing between respective ring gears 36 and 38.

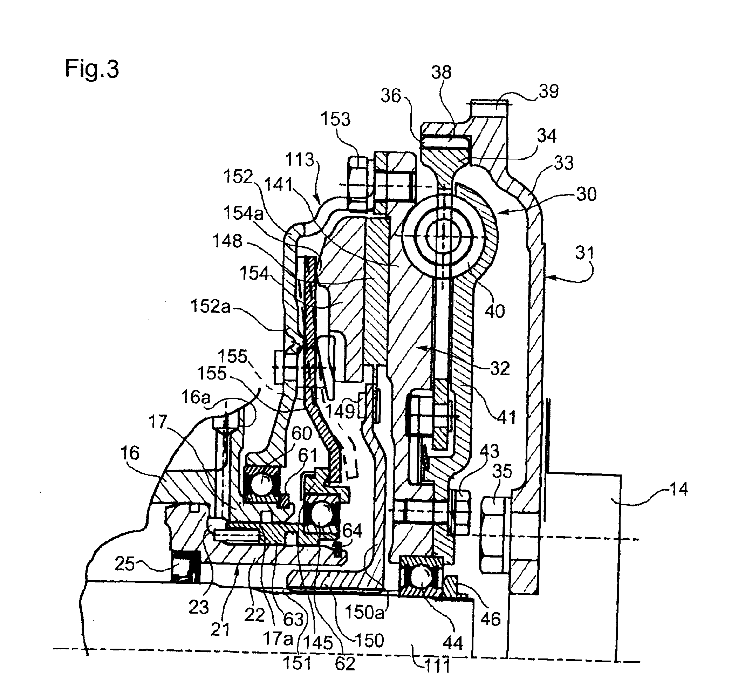

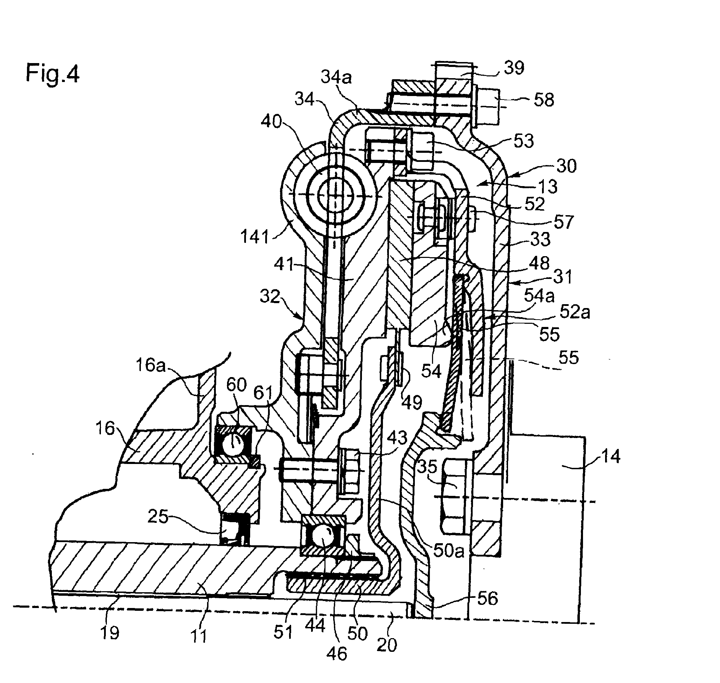

Figures 3 and 4 show two preferred embodiments of a clutch and flywheel assembly according to the present invention, for use in a motor-vehicle single-clutch transmission. These embodiments will not be described in further detail since they are clearly based on the two embodiments described above.

In particular, the embodiment of Figure 3 is derived from the part of the embodiment transmission of Figure 1 comprising the clutch 113 associated with the outer input shaft 111 of the gearbox. For this reason, all the components forming part of the clutch of Figure 3 are indicated by the same reference numerals as those used for the corresponding components of the clutch 113 of Figure 1. The same applies to the embodiment of Figure 4 which is based on the structure of the clutch 13 of Figure 2.

Naturally, the principle of the invention remaining the same, the embodiments and manufacturing details may be varied widely with respect to those described and illustrated purely by way of non-limiting example.

## Claims

1. A clutch and flywheel assembly intended to be mounted between a crankshaft (14) and a gearbox of a motor-vehicle, comprising
a clutch unit (12) with at least one clutch (13, 113; 113; 13) including a driven portion (48, 50, 148, 150; 148, 150; 48, 50) intended to be connected for rotation with a respective at least one input shaft (11, 111; 111; 11) of the gearbox and a driving portion (41, 52, 54, 141, 152, 154; 141, 152, 154; 41, 52, 54) intended to be connected for rotation with the crankshaft (14); and
a two-mass flywheel (30) comprising a first engine-side mass (31), a second gearbox-side mass (32) comprising said driving portion (41, 52, 54, 141, 152, 154; 141, 152, 154; 41, 52, 54) of the at least one clutch (13, 113; 113; 13) and torsional damping means (40) interposed between said first and second masses (31, 32);
**characterized in that** the said second mass (32) is configured to be supported for rotation (44) on the at least one input shaft (11, 111; 111; 11) of the gearbox.

2. A clutch and flywheel assembly according to Claim 1, wherein the first mass (31) of the two-mass flywheel (30) comprises two separate elements (33, 34), namely a first element (33) intended to be fixed directly to the crankshaft (14) and a second element (34) connected for rotation with the second mass (32).

3. A clutch and flywheel assembly according to Claim 2, wherein the first and second elements (33, 34) are releasably connected for rotation with each other.

4. A clutch and flywheel assembly according to Claim 3, wherein the torsional damping means (40) are arranged after the connection between the first and second elements (33, 34) of the first mass (31) of the flywheel (30), in the direction from the crankshaft (14) to the gearbox.

5. A clutch and flywheel assembly according to Claim 3 or Claim 4, wherein the first and second elements (33, 34) of the first mass (31) of the flywheel (30) have respective ring gears (36, 38) meshing with one another.

6. A clutch and flywheel assembly according to Claim 3 or Claim 4, wherein the first and second elements (33, 34) of the first mass (31) of the flywheel (30) are connected for rotation with one another by means of screws (58).

7. A clutch and flywheel assembly according to any of the preceding claims, wherein said at least one clutch (13, 113; 113; 13) is a dry clutch, of which the driving portion (41, 52, 54, 141, 152, 154; 141, 152, 154; 41, 52, 54) comprises an abutment member (41, 141; 141; 41) while the driven portion (48, 50, 148, 150; 148, 150; 48, 50) comprises a friction plate (48, 148; 148; 48) operable to be clamped against the abutment member (41, 141; 141; 41).

8. A clutch and flywheel assembly according to Claim 7, wherein the clutch unit (12) comprise one clutch (113; 13) and wherein the abutment member (141; 41) of said clutch (113; 13) is configured to be supported for rotation on the input shaft (111; 11) of the gearbox by one bearing (44) through which axial forces resulting from actuation of the clutch (113; 13) can be transmitted to the said input shaft (111; 11).

9. A clutch and flywheel assembly according to Claim 7, wherein the clutch unit (12) comprises a first clutch (13) intended to couple the crankshaft (14) to a first, inner input shaft (11) of the gearbox and a second clutch (113) intended to couple the crankshaft (14) to a second, outer input shaft (111) of the gearbox, and wherein the abutment members (41, 141) of both the clutches (13, 113) are configured to be supported for rotation on the outer input shaft (111) of the gearbox by one bearing (44) through which axial forces resulting from actuation of the clutches (13, 113) can be transmitted to the outer input shaft (111).

10. A clutch and flywheel assembly according to any of the preceding claims, wherein said at least one clutch (13, 113; 113; 13) is normally-engaged.

11. A motor-vehicle transmission having a gearbox with at least one input shaft (11, 111; 111; 11) and a clutch and flywheel assembly according to any of the preceding claims, said clutch and flywheel assembly being mounted between a crankshaft (14) of the motor-vehicle and the gearbox.

12. A motor-vehicle having a transmission according to Claim 11.
